# EUROPÄISCHE PATENTSCHRIFT

(11) **EP 0 443 134 B1**
(45) Veröffentlichungstag und Bekanntmachung des Hinweises auf die Patenterteilung: **26.10.1994**
(21) Anmeldenummer: 90123886.5
(22) Anmeldetag: 12.12.1990
(51) Int. Cl.: F16B 37/12, B29C 65/44

(54) **Gewindeeinsatz**
Threaded insert
Douille filetée

(30) Priorität: 12.01.1990 DE 4000782
(43) Veröffentlichungstag der Anmeldung: 28.08.1991
(73) Patentinhaber: Böllhoff & Co, GmbH & Co KG, D-33649 Bielefeld (DE)
(72) Erfinder: Kobusch, Klaus, W-4800 Bielefeld 1 (DE)
(74) Vertreter: Patentanwälte Hauck, Graalfs, Wehnert, Döring, Siemons

(56) Entgegenhaltungen:
- EP-A- 0 021 154
- CH-A- 466 946
- FR-A- 2 358 577
- US-A- 2 455 885

## Beschreibung

Die Erfindung betrifft einen metallischen Gewindeeinsatz gemäß dem Oberbegriff des Patentanspruchs 1.

Metallische Gewindeeinsätze zum Einbau in eine Bohrung eines Werkstücks aus Kunststoff sind vielseitig bekannt. Sie weisen alle auf der Außenfläche Erhebungen und Eintiefungen auf, die so angeordnet sind, daß die axiale Auszugskraft eines solchen Gewindeeinsatzes möglichst hoch ist und daß der Gewindeeinsatz gegen Verdrehen gesichert ist. Bekannte Gewindeeinsätze (DE 2355166) sind konisch und zum Wärme-Druckeinbau oder Ultraschalleinbau vorgesehen. Andere bekannte Gewindeeinsätze (EP 0272020) sind mit einem Gewinde auf der zylindrischen Außenseite in ein zylindrisches Bohrloch eingedreht.

Der Erfindung liegt die Aufgabe zugrunde, einen Gewindeeinsatz mit besserer Verankerung zu schaffen, der für den Wärme-Druckeinbau, Ultraschalleinbau und auch zum Eindrehen geeignet ist.

Die genannte Aufgabe ist erfindungsgemäß durch die Merkmale des Patentanspruchs 1 gelöst.

Es handelt sich somit erfindungsgemäß um einen leicht konischen Einsatz, auf dessen Außenseite ein feines Gewinde aufgebracht ist, das beim Eindrehen in eine entsprechende konische glattwandige Aufnahmebohrung sein Gewinde in den Kunststoff einschneidet und der vom Gewinde verdrängte Kunststoff in die Profilzwischenräume einfließt und diese möglichst weitgehend ausfüllt, während bei einem Wärme-Druckeinbau durch das Einfließen des geschmolzenen Kunststoffs in die Zwischenräume zwischen den Gewindegängen ein entsprechender Effekt erzielt wird.

Bei dem Gewinde handelt es sich um eine Art Feingewinde mit einer geringen Steigung, von etwa 0,5 mm und einer Gewindetiefe von annähernd gleichen Abmessungen. Das Gewinde ist kegelig bzw. sägezahnförmig, wobei die radialen Flächen in Auszugsrichtung und die kegeligen Flächen in Einsetzrichtung angeordnet sind. Die Gewindespitzen sollen scharfkantig und gratfrei sein, um beim Eindrehen das Eindringen in den Kunststoff zu erleichtern. Der Gewindegrund kann ebenfalls spitzwinklig oder auch abgerundet sein.

Die Konizität des Gewindeeinsatzes sowie der Aufnahmebohrung sind übereinstimmend gewählt und betragen beispielsweise 4°. Der Durchmesser der Aufnahmebohrung gegenüber dem Einsatz ist so gewählt, daß dieser so weit frei in die Aufnahmebohrung eingesetzt werden kann, daß dann anschließend zwei bis drei Umdrehungen des Einsatzes ausreichen, um die Verankerung im Kunststoff herbeizuführen. Vorzugsweise schließt dann die Stirnseite des Gewindeeinsatzes bündig mit der Werkstückoberfläche ab.

Im Ausführungsbeispiel sind verschiedene Abmessungen des Gewindeeinsatzes angegeben. Ohne Einschränkung auf Zahlenangaben kann man das Gewinde auch dahingehend definieren, daß die Gewindetiefe größenordnungsmäßig den Eintiefungen beim Rändeln oder Kreuzkordeln einer Fläche entspricht.

Vorzugsweise besteht der Gewindeeinsatz aus Messing.

Durch Versuche ist nachgewiesen worden, daß der Einbau durch Eindrehen wesentlich erhöhte Auszugsfestigkeiten ergibt. Auch das vom Gewindeeinsatz aufgenommene Drehmoment ist beim Eindrehen ungleich höher als beim Warmeinbau. Vergleichsweise sei aber auch angegeben, daß selbst beim Warmeinbau des erfindungsgemäßen Gewindeeinsatzes noch höhere Auszugsfestigkeiten und höhere Drehmomente als bei dem bekannten Gewindeeinsatz gemäß DE-PS 23 55 166 der Anmelderin erhalten werden.

Ein Ausführungsbeispiel der Erfindung ist nachstehend anhand der Zeichnung erläutert:

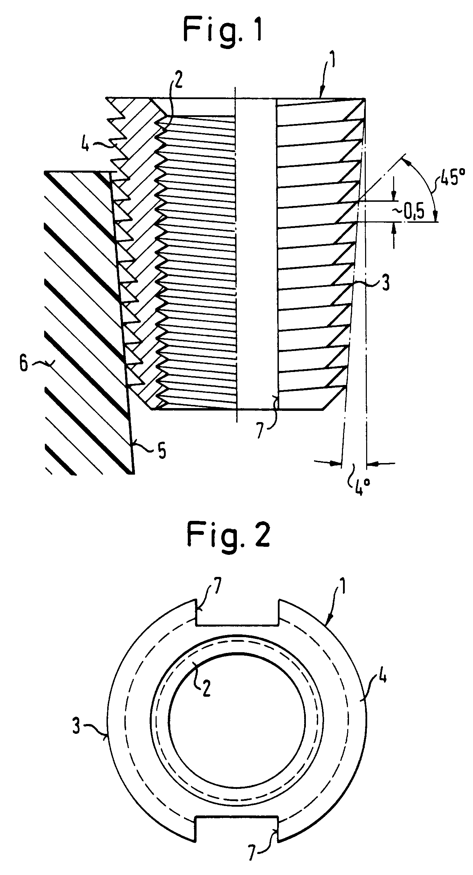

In Figur 1 ist ein Gewindeeinsatz teilweise in Ansicht und teilweise im Schnitt und in Figur 2 eine Draufsicht dargestellt.

Ein metallischer Gewindeeinsatz 1 ist mit einem Innengewinde 2 oder einem Stehbolzen versehen. Der Gewindeeinsatz ist an der Außenfläche 3 konisch, wobei der Konuswinkel wie dargestellt vorzugsweise 4° beträgt. Die Länge ist in der Regel größer als der Außendurchmesser des Gewindeeinsatzes.

Auf der Außenfläche 3 des konischen Gewindeeinsatzes ist durchgehend ein kegeliges Spezialgewinde 4 aufgebracht. Es handelt sich um ein feines Gewinde verhältnismäßig geringer Steigung, die vorzugsweise in der Größenordnung von 0,5 mm liegt. Der Flankenwinkel des Gewindeprofils beträgt vorzugsweise 45° Die Gewindetiefe ergibt sich demnach ebenfalls mit annähernd 0,5 mm. Es handelt sich somit um ein recht feines Gewinde. Wie in Figur 1 dargestellt, reicht der Einsatz mindestens mit 2/3 seiner Länge in die glattwandige Aufnahmebohrung 5 in einem Kunststofformteil 6, und ist der Fügevorgang beendet, wenn der Einsatz mit seiner vollen Länge im Kunststoff eingebettet ist. Für spröde Kunststoffe ist der Einsatz in Längsrichtung mit einem durchgehenden Schneidschlitz 7 versehen, der für weichere Kunststoffe entfallen kann.

Ferner kann an der Stirnfläche mit dem größeren Durchmesser ein radialer Flansch angeformt sein. Unterhalb des Flansches ist in einer Ringnut in der Außenfläche 3 ein Dichtring eingesetzt.

## Patentansprüche

1. Metallischer Gewindeeinsatz (1) in einer glattwandigen Aufnahmebohrung (5) eines Werkstücks aus Kunststoff, bei dem die Außenfläche des konischen Gewindeeinsatzes ein Gewinde (4) aufweist,
dadurch gekennzeichnet, daß auf der Außenfläche des Gewindeeinsatzes (1) ein feines, sägezahnförmiges Gewinde (4) mit einer Steigung von etwa 0,5 mm vorgesehen ist und daß der Konuswinkel des Gewindeeinsatzes gleich dem Konuswinkel der konischen Aufnahmebohrung ist.

2. Gewindeeinsatz nach Anspruch 1,
dadurch gekennzeichnet, daß der Flankenwinkel des Gewindeprofils unter 50°, vorzugsweise etwa 45°, beträgt.

3. Gewindeeinsatz nach Anspruch 1 oder 2,
dadurch gekennzeichnet, daß die Steigung des Gewindes (4) etwa 0,5 mm beträgt und etwa der Gewindetiefe entspricht.

4. Gewindeeinsatz nach einem der Ansprüche 1 bis 3,
dadurch gekennzeichnet, daß in Längsrichtung des Gewindes durchlaufende Schneidschlitze (7) vorgesehen sind.

5. Gewindeeinsatz nach einem der Ansprüche 1 bis 4,
dadurch gekennzeichnet, daß an der Stirnfläche mit dem größeren Durchmesser ein radialer Flansch angeformt ist und ein Dichtring unterhalb des Flansches in eine Ringnut am Gewindeeinsatz eingesetzt ist.

6. Gewindeeinsatz nach einem der Ansprüche 1 bis 4,
dadurch gekennzeichnet, daß das Gewinde auf der gesamten Länge des Gewindeeinsatzes (1) durchgehend ausgebildet ist.

7. Gewindeeinsatz nach einem der Ansprüche 1 bis 6,
dadurch gekennzeichnet, daß der Durchmesser der konischen Aufnahmebohrung (5) derart gewählt ist, daß bei Beginn des Fügens der Gewindeeinsatz (1) mit mindestens 2/3 seiner Gesamtlänge von der Aufnahmebohrung aufgenommen ist.

## Claims

1. A metallic threaded insert (1) in a smooth receiving bore (5) of a workpiece made of a plastic material, in which the outer face of the conical threaded insert is provided with a thread (4), characterized in that a fine, saw-tooth-shaped thread (4) having a pitch of about 0.5 mm is provided on the outer face of the threaded insert (1) and that the cone angle of the threaded insert equals the cone angle of the conical receiving bore.

2. The threaded insert of claim 1, characterized in that the flank angle of the thread profile is smaller than 50°, preferably about 45°.

3. The threaded insert of claim 1 or 2, characterized in that the pitch of the thread (4) is about 0.5 mm, approximately corresponding to the depth of the thread.

4. The threaded insert of one of claims 1 to 3, characterized in that cutting slots (7) are provided which continuously extend in a longitudinal direction of the thread.

5. The threaded insert of one of claims 1 to 4, characterized in that a radial flange is integrally formed to the head face having the larger diameter and that a seal ring is placed in an annular groove of the threaded insert below the flange.

6. The threaded insert of one of claims 1 to 4, characterized in that the thread is continuously formed on the full length of the threaded insert (1).

7. The threaded insert of one of claims 1 to 6, characterized in that the diameter of the conical receiving bore (5) is selected such that at least two third of the full length of the threaded insert (1) are received in said receiving bore when the mounting is initiated.

## Revendications

1. Insert fileté métallique (1) dans un perçage de positionnement lisse (5) d'une pièce en matière plastique, dans laquelle la surface extérieure de l'insert fileté conique présente un filetage (4),
caractérisé en ce que, sur la surface extérieure de l'insert fileté (1), est prévu un filetage fin, en forme de dents de scie (4) d'un pas d'environ 0,5 mm et que l'angle de cône de l'insert fileté est égal à l'angle de cône du perçage récepteur conique.

2. Insert fileté selon la revendication 1, caractérisé en ce que l'angle de flanc du profil de filetage a une valeur inférieure à 50°, égale de préférence à environ 45°.

3. Insert fileté selon la revendication 1 ou 2, caractérisé en ce que le pas du filetage (4) a une valeur d'environ 0,5 mm et correspond à peu près à la profondeur du filetage.

4. Insert fileté selon une des revendications 1 à 3, caractérisé en ce que des entailles de coupe (7) sont prévues sur toute la longueur dans la direction longitudinale du filetage.

5. Insert fileté selon une des revendications 1 à 4, caractérisé en ce que, sur la surface frontale de plus grand diamètre, est formée une bride radiale et qu'une bague d'étanchéité est mise en place en-dessous de la bride dans une rainure pour bague ménagée dans l'insert fileté.

6. Insert fileté selon l'une des revendications 1 à 4, caractérisé en ce que le filetage est disposé d'une manière continue sur toute la longueur de l'insert fileté (1).

7. Insert fileté selon l'une des revendications 1 à 6, caractérisé en ce que le diamètre du perçage du positionnement conique (5) est choisi de telle sorte que, au commencement de l'assemblage, l'insert fileté (1) pénètre d'au moins les 2/3 de sa longueur totale dans le perçage récepteur.
